# EUROPEAN PATENT APPLICATION

(11) **EP 3 498 635 A1**
(43) Date of publication of application: **19.06.2019**
(21) Application number: 17206658.1
(22) Date of filing: 12.12.2017
(51) Int. Cl.: B65G 1/10

(54) **DRIVING MECHANISM FOR A SYSTEM OF MOBILE STORAGE SHELVES AND A METHOD OF OPERATION THEREOF**

(71) Applicant: Guryca, Tomas, 68801 Bystrice pod Lopenikem (CZ)
(72) Inventor: Guryca, Tomas, 68801 Bystrice pod Lopenikem (CZ)
(74) Representative: Hartvichova, Katerina

(57) **Abstract**

The present invention relates to a driving mechanism (1) for a system of at least two mobile storage shelves (1a, 1b, 1c, 1d), wherein the at least two shelves (1a, 1b, 1c, 1d) are arranged to be movable along the rails (2), the driving mechanism (1) comprising at least two rails (2) for guiding the at least two shelves (1a, 1b, 1c, 1d), guiding means (4), the guiding means (4) being adapted to selectively be in engaging contact with the at least two shelves (1a, 1b, 1c, 1d) and to be movable within a guiding support (3) for moving said shelves (1a, 1b, 1c, 1d) along the rails (2), and engaging means (11), the engaging means (11) being adapted to be mounted on the storage shelf and to be movable from a first position, in which said engaging means (11) is disengaged from the guiding means (4), and the second position, in which said engaging means (4) is engaged with the guiding means (4), and wherein the engaging means (4) is engageable with the guiding means (4) through a receiving means (12) positioned in the guiding means (4) so that the position of the engaging means (11) and the position of the receiving means (12) overlap.

The present invention is further related to a mobile storage system comprising at least two mobile storage shelves and the driving mechanism as described above and to a method of operating such driving mechanism.

## Description

### Technical Field

The present invention relates to a driving mechanism for a system of mobile storage shelves. The present invention further relates to a system of mobile storage shelves comprising such driving mechanism and a method of operation the driving mechanism according to the present invention.

### Background Art

Mobile storage shelves are known and widely used. The shelves or cabinets are mounted onto a carriage and rail system, such that the shelves can be moved to provide access to each shelf from a single working aisle without the need to have fixed aisles between each couple of shelves. They may be operated manually, or they may be powered and controlled electronically. Such systems lead to increased storage capacity and saved storage space. The systems of mobile storage shelves also provide savings on operational costs for the overall space.

The driving mechanism currently in use is based on a principle of moving each of the shelves separately, such that each shelf is equipped with and driven by its own driving mechanism comprising an electric motor, a gear box and gear shafts, and wheels driven by this mechanism.

With such a solution, a lot of time is required to move the shelves in order to provide the aisle at the preferred location, especially in large storage houses, where the systems of moving shelves contain large number of shelves. Furthermore, shelves provided with driving mechanisms as described above are expensive due to components of the driving mechanisms. Finally, such complex system requires an operating system, which is another rather expensive component of this solution.

### Disclosure of the Invention

The aim of the present invention is to overcome the above mentioned drawbacks and provide an inexpensive solution without costly components, which is easy and fast to operate.

This is achieved by a driving mechanism for a system of mobile storage shelves as presented in claim 1.

The system of mobile storage shelves contains at least two storage shelves, which are arranged to be movable along the rails. The storage shelves are described without further restrictions, it is to be understood that the driving system according to the presented invention may be implemented with any type of storage shelves - office mobile shelves, shelves for larger storage spaces such as libraries, archives etc., or large and heavy pallet storage shelves.

The driving system comprises at least two rails for guiding the storage shelves, at least one of the rails providing a guiding support, for instance in a form of a groove. The guiding support, e.g. the groove, extends along the length of the rail.

The shelves are guided along the rails by means of wheels comprised by the storage shelves. Wheels are preferably made of steel and mounted on the storage shelves by means of U-profiles, plugs and bearings. Rails, wheels, as well as the construction of the wheels on the storage shelves as commonly used are suitable for the driving mechanism of the presented invention. The driving mechanism can thus be applied to any existing system of mobile storage shelves.

The rails of the driving mechanism, especially the at least one rail with the groove, may be positioned on the floor, preferably anchored in a concrete support, thus providing a more stable and more reliable mechanism, especially suitable for large and heavy pallet storage shelves.

The driving system further comprises guiding means, the guiding means being movable within the guiding support and comprising preferably at least one guiding rod, the at least one guiding rod being movably positioned in the groove of the at least one rail. Preferably, the mechanism comprises one guiding rod positioned in one rail. If there is more than one guiding rod, each guiding rod is positioned in a separate rail. The solution with more than one guiding rod is preferred especially for large and heavy pallet storage shelves

Preferably, the guiding rod is made of drawn steel or steel alloys.

The cross-section of the groove of the rail and the cross-section of the guiding rod may correspond in shape.

The groove and / or the guiding rod may have a U-shaped profile, or a rectangular profile and /or the guiding rod may have a diameter between 30 mm and 60 mm, preferably 40 mm.

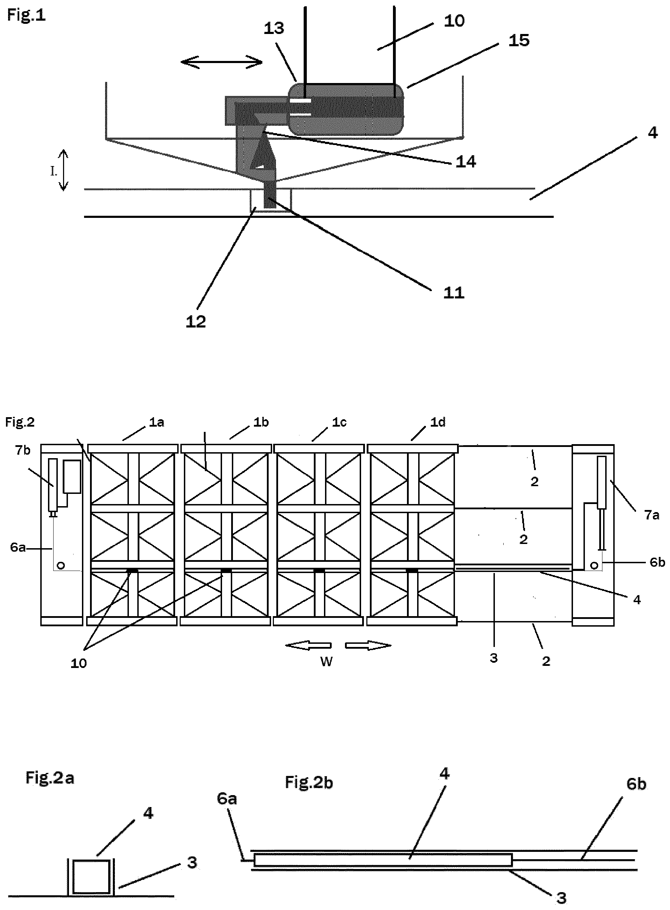

The at least one guiding rod is adapted to be moved within said groove, preferably by adjusting the length of the guiding rod so as to allow the movement within said groove. Preferably, the guiding rod extends along at least a part of the length of the groove. Even more preferably, the guiding rod extends along the width of the at least two storage shelves employed in the system, the width of the shelf being measured in the direction parallel to the direction of the rails (see width of the shelf w, Fig. 2).

In a preferred embodiment, the length of the at least one guiding rod may correspond to the length of the groove reduced by a predetermined value; this predetermined value corresponding to a preferred width of the aisle to be provided between the two adjacent storage shelves, the width of the aisle again measured in the direction parallel to the direction of the rails. The preferred width of the aisle depends on the type of storage shelves and preferences of the user. The person skilled in the field would know what the preferred widths of the aisles are and how they differ for different types of storage shelves, and would thus be able to determine the preferred width for a given type of storage shelf. Thus, he would also know how to determine the length of the guiding rod based on the length of the groove and the predetermined value corresponding to a preferred width of the aisle.

The driving system further comprises means for moving the at least one guiding rod within the groove of said rail; the means preferably comprising a pair of steel ropes and a pair of hydraulic cylinders.

In a preferred embodiment, the first hydraulic cylinder is connected to the first end of the guiding rod by the first steel rope and the second hydraulic cylinder is connected to the second end of the guiding rod by the second steel rope. A rope made of steel or steel alloys is meant by the term steel rope. A steel drive chain may be used instead of the steel rope.

If there is more than one guiding rod enabled in the system, the pair of steel ropes and the pair of hydraulic cylinders are preferably provided for each guiding rod separately. However, it is possible to have a pair of steel ropes for each guiding rod, which are all connected to a single pair of hydraulic cylinders.

In further preferred embodiment, the means for moving the guiding rod within the groove of the rail may comprise the pair of steel ropes as described in the paragraph above, wherein the length of the first steel rope is equal to the length of the second steel rope, this length being equal to a predetermined value, which corresponds to a preferred width of an aisle to be provided. As described above, the person skilled in the field would know what the preferred widths of the aisles are and how they differ for different types of storage shelves; therefore, he would be able to determine the preferred width of the aisle, as well as the length of the steel ropes as provided in this embodiment.

The driving system further comprises a plurality of locking mechanisms for engaging each of the storage shelves employed in the system with the guiding means. The locking mechanism is provided for each storage shelf separately and comprises engaging means, e.g. a plug, and receiving means, e.g. a socket as a counterpart of the plug, and means for moving the engaging means between the first position and the second position.

The engaging means is adapted to be mounted on the storage shelf and adapted to be movable between a first position and a second position.

In the following, the example comprising plug and socket positioned in the guiding rod is described, however, it is to be understood that other engaging, receiving and guiding means may be used.

In the first position, the plug is disengaged from the guiding rod. In the second position, the plug is to be engaged with the guiding rod by means of fitting into the socket, which is positioned in the guiding rod so as to correspond with the position of the plug.

The plug is moved from the first position to the second position by means for moving the plug between the first position and the second position. In a preferred embodiment, the means for moving the plug between the first position and the second position comprise a lever and a pneumatic piston, which is provided for each locking mechanism separately.

If the guiding means comprise more than one guiding rod, then the locking mechanism is provided for each storage shelf and each guiding rod separately. If there is more than one guiding rod enabled in the system, each of the at least two storage shelves may comprise a corresponding number of plugs. In this case, all the plugs of the shelf may be moved from the first position to the second position at once by single set of lever and a pneumatic piston.

Means for moving the plug between the first position and the second position may further be provided for example by an electromagnetic valve or hydraulic cylinder.

The driving mechanism as described above is operated as described in the following. The example comprising plug and socket positioned in the guiding rod is described, however, it is to be understood that other engaging, receiving and guiding means may analogically be used. The steps are provided for embodiment with one guiding rod enabled in the system, but it is to be understood that the same principle applies analogically for the embodiments with more than one guiding rod enabled in the system.

For each of the shelves, which are to be moved, the plug is moved from the first position, in which it is disengaged from the guiding rod to the second position, in which it is engaged with the guiding rod, preferably by means comprising the lever and the pneumatic piston.

For example, if the system comprises ten storage shelves and the aisle is to be created between third and fourth shelf, the plugs of the fourth and each subsequent shelf, i.e. 4^{th}, 5^{th}, 6^{th}, 7^{th}, 8^{th}, 9^{th}, and 10^{th} shelf, is moved from the first position, in which it is disengaged from the guiding rod to the second position, in which it is engaged with the guiding rod.

By moving the plug from the first position to the second position, the plug is inserted into the socket provided in the guiding rod.

The guiding rod is then moved within the groove of the rail by means for moving the guiding rod; the means preferably comprising a pair of steel ropes and a pair of hydraulic cylinders.

The guiding rod is moved within the groove of the rail in the direction from the shelf which is to remain stable.

In the example given above, if the system comprises ten storage shelves and the aisle is to be created between third and fourth shelf, the fourth and each subsequent shelf is engaged with the guiding rod. Thus, by moving the guiding rod in the direction from the third shelf, the fourth and each subsequent shelf are moved one by one, or, preferably, at once, and the aisle between the third and the fourth shelf is created.

The plug is inserted in the socket in a direction perpendicular to the direction of movement of the shelves, therefore there is no need to provide any special locking means between the plug and socket, the plug is engaged with the socket by means of the force acting perpendicularly to the direction in which the plug is inserted into the socket. However, additional locking means may be applied.

Preferably, for the driving mechanism comprising means for moving the guiding rod comprising a pair of steel ropes and a pair of hydraulic cylinders, wherein the length of the first steel rope is equal to the length of the second steel rope, this length being equal to a predetermined value corresponding to the preferred width of the aisle, the guiding rod is moved in a first direction by the first steel rope and in a second direction by the second steel rope. As the first rope and the second rope are of the same length, the length corresponding to the preferred width of the aisle to be provided, the mechanism may be operated in such a way that when the first hydraulic cylinder is retracted to maximum for creating the aisle, the second hydraulic cylinder is extended to maximum and vice versa for moving the shelves back to their original space saving position.

The first hydraulic cylinder, which is originally in fully extended position, is retracted to fully retracted position, thereby pulling the guiding rod as well as the second steel rope and the second hydraulic cylinder from its fully retracted position to fully extended position. Vice versa, for moving the shelves back to their original position, the second hydraulic cylinder is retracted from fully extended position to fully retracted position, thereby pulling the guiding rod as well as the first steel rope and the first hydraulic cylinder from its fully retracted position to fully extended position. It has the advantage that the setup of system is very easy. Especially when the system is operated automatically, there is no need to provide a complex and complicated programs to operate the system.

The driving mechanism may be operated manually, or, preferably the driving system further comprises a user interface and a control unit for automated operating.

Further, the presented invention relates to a mobile storage system comprising at least two mobile storage shelves and the driving mechanism as described above.

### Brief description of figures

Fig. 1 shows a schematic view of the locking mechanism for engaging the storage shelf with the guiding rod in accordance with a preferred embodiment of the invention.
Fig. 2 shows a schematic view of a system of mobile storage shelves with the driving mechanism in accordance with a preferred embodiment of the invention; Fig. 2a and Fig. 2b showing the positioning of the guiding rod in the groove.

### Detailed description of the invention

In the following example, a preferred embodiment of the invention is described with references to Fig. 1 and Fig. 2, 2a, and 2b.

The system of mobile storage shelves contains four storage shelves 1a, 1b, 1c, 1d, which are arranged to be movable along the rails 2. The driving system comprises rails 2, one of the rails 2 having a groove 3. The rails, especially, the rail with the groove, are anchored in a concrete support.

The shelves 1a, 1b, 1c, 1d are guided along the rails 2 by means of wheels (not shown) comprised by the storage shelves and moving within the grooves of the rails. Rails, wheels as well as the construction of the wheels on the storage shelves in this example are as commonly used.

The driving system 1 further comprises a guiding rod 4 positioned in the groove 3 of said rail 2. The cross-section of the guiding rod 4 is rectangular and has a diameter of 40 mm. The guiding rod 4 is made of drawn steel.

The guiding rod 4 is adapted to be moved within said groove 3 by adjusting the length of the guiding rod 4 so as to allow the movement within said groove 3. In this example, the length of the guiding rod 4 corresponds to the length of the groove 3 reduced by a predetermined value; this predetermined value corresponding to a preferred width of the aisle to be provided between the two adjacent storage shelves.

The driving system 1 further comprises means 5 for moving the guiding rod 4 within the groove 3 of said rail 2, which comprise a pair of steel ropes 6a, 6b and a pair of hydraulic cylinders 7a, 7b. The length of the first steel rope 6a is equal to the length of the second steel rope 6b, this length being equal to a predetermined value, which corresponds to a preferred width of an aisle to be provided.

The driving system 1 further comprises a locking mechanism 10 for engaging each of the storage shelves 1a, 1b, 1c, 1d employed in the system with the guiding rod 4. The locking mechanism is provided for each storage shelf separately and comprises a plug 11, a socket 12 as a counterpart of the plug, and means 13 for moving the plug 11 between the first position and the second position. In the first position, the plug 11 is disengaged from the guiding rod 4. In the second position, the plug 11 is to be engaged with the guiding rod 4 by means of fitting into the socket 12, which is positioned in the guiding rod 4 so as to correspond with the position of the plug 11. The second position of the plug is shown in Fig. 1. A movement of the plug from the first position to the second position is indicated by arrow I.

The means 13 for moving the plug 11 between the first position and the second position comprise a lever 14 and a pneumatic piston 15.

The driving mechanism as described above is operated in the following manner: for each of the shelves which are to be moved, the plug 11 is moved from the first position, in which it is disengaged from the guiding rod 4 to the second position, in which it is engaged with the guiding rod 4 by the pneumatic piston 15, which operates the lever 14 by inlet / outlet of the air. In the second position, the plug 11 is inserted into the socket 12 provided in the guiding rod 4.

For example, if the aisle is to be created between third shelf 1c and fourth shelf 1d, the plug 11 of the fourth shelf 1d is moved from the first position to the second position, in which it is engaged with the guiding rod 4. If the aisle is to be created between second shelf 1b and third shelf 1c, the plug 11 of the third shelf 1c and the plug 11 of the fourth shelf 1d are moved from the first position to the second position, in which they are engaged with the guiding rod 4.

The guiding rod 4 is then moved within the groove 3 of the rail 2 by means for moving the guiding rod; the means comprising a pair of steel ropes 6a, 6b and a pair of hydraulic cylinders 7a, 7b. The guiding rod 4 is moved within the groove 3 of the rail 2 in the direction from the shelf which is to remain stable. Thus, by moving the guiding rod 4, all the shelves that are to be moved, are moved at once, i.e., if the aisle is to be created between second shelf 1b and third shelf 1c, the third shelf 1c and the fourth shelf 1d are moved at once by moving the guiding rod 4, as they both are engaged with the guiding rod 4.

As the first rope 6a and the second rope 6b are of the same length, the length corresponding to the preferred width of the aisle to be provided, the mechanism is operated in such a way that when the first hydraulic cylinder 7a is retracted to maximum for creating the aisle, the second hydraulic cylinder 7b is extended to maximum and vice versa for moving the shelves back to their original space saving position, namely the first hydraulic cylinder 7a, which is originally in fully extended position, is retracted to fully retracted position, thereby pulling the guiding rod 4 as well as the second steel rope 6b and the second hydraulic cylinder 7b from its fully retracted position to fully extended position. Vice versa, for moving the shelves back to their original position, the second hydraulic cylinder 7b is retracted from fully extended position to fully retracted position, thereby pulling the guiding rod 4 as well as the first steel rope 6a and the first hydraulic cylinder 7a from its fully retracted position to fully extended position.

The driving mechanism comprises a user interface and a control unit (not shown) for automatic operating.

## Claims

1. A driving mechanism (1) for a system of at least two mobile storage shelves (1a, 1b, 1c, 1d), wherein the at least two shelves (1a, 1b, 1c, 1d) are arranged to be movable along the rails (2), the driving mechanism (1) comprising
at least two rails (2) for guiding the at least two shelves (1a, 1b, 1c, 1d),
guiding means (4), the guiding means (4) being adapted to selectively be in engaging contact with the at least two shelves (1a, 1b, 1c, 1d) and to be movable within a guiding support (3) for moving said shelves (1a, 1b, 1c, 1d) along the rails (2), and
engaging means (11), the engaging means (11) being adapted to be mounted on the storage shelf and to be movable from a first position, in which said engaging means (11) is disengaged from the guiding means (4), and the second position, in which said engaging means (4) is engaged with the guiding means (4), and wherein
the engaging means (4) is engageable with the guiding means (4) through a receiving means (12) positioned in the guiding means (4) so that the position of the engaging means (11) and the position of the receiving means (12) overlap.

2. The driving mechanism (1) according to claim 1, for a system of at least two mobile storage shelves (1a, 1b, 1c, 1d), wherein the at least two shelves (1a, 1b, 1c, 1d) are arranged to be movable along the rails (2), the driving mechanism (1) comprising
at least two rails (2) for guiding the at least two shelves (1a, 1b, 1c, 1d), at least one of the rails having a groove (3), the groove (3) extending along the length of the rail (2), the at least one rail with the groove (3) being preferably positioned in a concrete support,
at least one guiding rod (4), the guiding rod (4) being positioned in the groove (3) of said at least one rail (2) and being adapted to be movable within said groove (3),
means (5) for moving the at least one guiding rod (4) within the groove (3) of said at least one rail (2), and
a plurality of locking mechanisms (10) for engaging each of the at least two storage shelves (1a, 1b, 1c, 1d) with at least one guiding rod (4), each of the locking mechanisms (10) comprising
a plug (11), the plug (11) being adapted to be mounted on the storage shelf and to be movable between a first position and a second position,
a socket (12), the socket (12) being positioned in the guiding rod (4) so that the position of the plug (11) and the position of the socket (12) overlap, and
means (13) for moving the plug (11) between the first position, in which said plug (11) is disengaged from the guiding rod (4), and the second position, in which said plug (4) is engaged with the socket (12) of the guiding rod (4).

3. The driving mechanism (1) according to claim 2, wherein the length of the at least one guiding rod (4) is adapted to extend along at least the width of the at least two shelves (1a, 1b, 1c, 1d) employed in the system.

4. The driving mechanism (1) according to any one of the claims 2 to 3, wherein the length of the at least one guiding rod (4) is adapted to extend along the length of the groove (3) reduced by the predetermined value, the value corresponding to a preferred width of an aisle to be provided.

5. The driving mechanism (1) according to any one of the claims 2 to 4, wherein the means (13) for moving the plug (11) between the first position and the second position comprise a lever (14) and a pneumatic piston (15).

6. The driving mechanism (1) according to any one of the claims 2 to 5, wherein the means (5) for moving the at least one guiding rod (4) within the groove (3) of the rail (2) comprise a pair of steel ropes (6a, 6b) and a pair of hydraulic cylinders (7a, 7b), wherein a first hydraulic cylinder (7a) is connected to a first end of the at least one guiding rod (4) by a first steel rope (6a) and a second hydraulic cylinder (7b) is connected to a second end of the at least one guiding rod (4) by a second steel rope (6b).

7. The driving mechanism (1) according to claim 6, wherein the length of the first steel rope (6a) is equal to the length of the second steel rope (6b), the length being equal to a predetermined value, the value corresponding to a preferred width of an aisle to be provided.

8. The driving mechanism (1) according to any one of the claims 2 to 7, wherein the cross-section of the groove (3) of the at least one rail (2) and the cross-section of the at least one guiding rod (4) correspond in shape.

9. The driving mechanism (1) according to any one of the claims 2 to 8, wherein the at least one guiding rod (4) is rectangular in cross-section and /or has a diameter between 30 mm and 60 mm, preferably 40 mm and / or wherein the at least one guiding rod (4) is made of drawn steel or steel alloys.

10. The driving mechanism (1) according to any one of the preceding claims, wherein the driving system (1) further comprises a user interface and a control unit for automatic operating.

11. A mobile storage system comprising at least two mobile storage shelves (1a, 1b, 1c, 1d) and the driving mechanism (1) according to any one of the preceding claims.

12. A method of operating of a driving system for a system of at least two mobile storage shelves (1a, 1b, 1c, 1d) according to any one of preceding claims, the method comprising the steps of:
- moving engaging means (11) from a first position, in which the engaging means (11) is disengaged from guiding means (4) to a second position, in which the engaging means (11) is engaged with receiving means(12) positioned in guiding means (4), this step being performed for each locking mechanism (10) for each of the at least two storage shelves (1a, 1b, 1c, 1d), which is to be moved, and
- moving the guiding means (4) within a guiding support (3) for moving the shelves engaged with the guiding means (4) through the locking mechanism (10).

13. The method of operating of the driving system according to claim 12, the method comprising the steps of
- moving a plug (11) from a first position, in which the plug (11) is disengaged from a guiding rod (4) to a second position, in which the plug (11) is engaged with a socket (12) of the guiding rod (4), this step being performed for each locking mechanism (10) for each of the at least two storage shelves (1a, 1b, 1c, 1d), which is to be moved, and
- moving the at least one guiding rod within a groove (3) of the at least one rail (2) for moving the shelves engaged with the guiding means (4) through the locking mechanism (10).

14. The method of operating of the driving system according to claim 13, wherein the step of moving the plug (11) from the first position to the second position is performed by a lever (14) and a pneumatic piston (15) and / or wherein the step of moving the shelves engaged with the at least one guiding rod (4) by moving the at least one guiding rod (4) within the groove (3) of the at least one rail (2) is performed by a pair of steel ropes (6a, 6b) and a pair of hydraulic cylinder (7a, 7b).

15. The method of operating of the driving system according to claim 14, wherein a length of a first steel rope (6a) is equal to a length of a second steel rope (6b), and wherein the step of moving the at least one guiding rod (4) within the groove (3) of the at least one rail (2) is performed by retracting the first hydraulic cylinder (7a) from fully extended position to fully retracted position, thereby pulling the guiding rod (4) as well as the second steel rope (6b) and the second hydraulic cylinder (7b) from its fully retracted position to fully extended position or vice versa.
